# EUROPEAN PATENT APPLICATION

(11) **EP 4 830 977 A2**
(43) Date of publication of application: **28.10.2026**
(21) Application number: 26169293.3
(22) Date of filing: 30.03.2026
(51) Int. Cl.: B60L 15/20, B60W 20/13

(54) **ELECTRIC VEHICLE**

(30) Priority: 24.04.2025 JP 2025072266
(71) Applicant: Suzuki Motor Corporation, Hamamatsu-shi, Shizuoka 432-8611 (JP)
(72) Inventor: HAYAKAWA, Shinichiro, Hamamatsu-shi, 432-8611 (JP)
(74) Representative: Haseltine Lake Kempner LLP

(57) **Abstract**

Object

To provide an electric vehicle that can improve drivability when output power of a battery is limited.

Solution

An electric vehicle 1 includes: a motor 2 that is a drive power source of the electric vehicle 1; a battery 4 configured to supply electric power to the motor 2; and a control unit 5 configured to: calculate, based on a battery outputtable power, a first drive torque limit value in accordance with a motor rotation speed; calculate a second drive torque limit value that is a smaller value than the first drive torque limit value in a low rotation speed region of the motor rotation speed; and determine a motor command torque by limiting driver request torque using the first drive torque limit value and the second drive torque limit value.

## Description

### Technical Field

The present invention relates to an electric vehicle.

### Background Art

Patent Document 1 describes that in an electric vehicle configured to control regenerative braking such that braking torque applied to wheels becomes maximum braking torque or less and that regenerative electric power output from a motor becomes maximum regenerative electric power or less, when the maximum regenerative electric power is changed in accordance with a charging rate or a temperature of a battery, the regenerative braking of the electric vehicle is appropriately limited while the maximum braking torque is also changed to suppress a sense of discomfort given to a user.

### Citation List

### Patent Literature

Patent Document 1: JP 2023-9646 A

### Summary of Invention

### Technical Problem

However, although Patent Document 1 describes a case where the regenerative electric power is limited, a process in a case where the output power of the battery is limited is not described, and there is room for improvement in this respect.

The present invention is thus intended to provide an electric vehicle that can improve drivability when output power of a battery is limited.

### Solution to Problem

In order to solve the problem above, the present invention is an electric vehicle including: a motor that is a drive power source; a battery configured to supply electric power to the motor; and a control unit configured to: calculate, based on a battery outputtable power, a first drive torque limit value in accordance with a motor rotation speed; calculate a second drive torque limit value that is a smaller value than the first drive torque limit value in a low rotation speed region of the motor rotation speed; and determine a motor command torque by limiting driver request torque using the first drive torque limit value and the second drive torque limit value.

### Advantageous Effects of Invention

As described above, according to the present invention, drivability when the output power of the battery is limited can be improved.

### Brief Description of Drawings

FIG. 1 is a schematic configuration diagram illustrating an electric vehicle according to one embodiment of the present invention.
FIG. 2 is a graph illustrating an example of torque limitation of a motor based on battery outputtable power of the electric vehicle according to one embodiment of the present invention.
FIG. 3 is a flow chart illustrating a procedure of output limited motor driving processing of the electric vehicle according to one embodiment of the present invention.
FIG. 4 is a graph illustrating an example of torque limitation of the motor based on the battery outputtable power of the electric vehicle according to another aspect of one embodiment of the present invention.
FIG. 5 is a flowchart illustrating a procedure of output limited motor driving processing of the electric vehicle according to another aspect of one embodiment of the present invention.

### Description of Embodiments

An electric vehicle according to one embodiment of the present invention is an electric vehicle including a motor that is a drive power source of the vehicle, and a battery that is configured to supply electric power to the motor, the electric vehicle being configured to include a control unit that is configured to calculate, based on battery outputtable power, a first drive torque limit value in accordance with a motor rotation speed, calculate a second drive torque limit value that is a smaller value than the first drive torque limit value in a low rotation speed region of the motor rotation speed, and determine motor command torque by limiting driver request torque using the first drive torque limit value and the second drive torque limit value.

Thus, the electric vehicle according to one embodiment of the present invention can improve drivability when the output power of the battery is limited.

### Examples

Hereinafter, an electric vehicle according to an embodiment of the present invention will be described in detail with reference to the drawings.

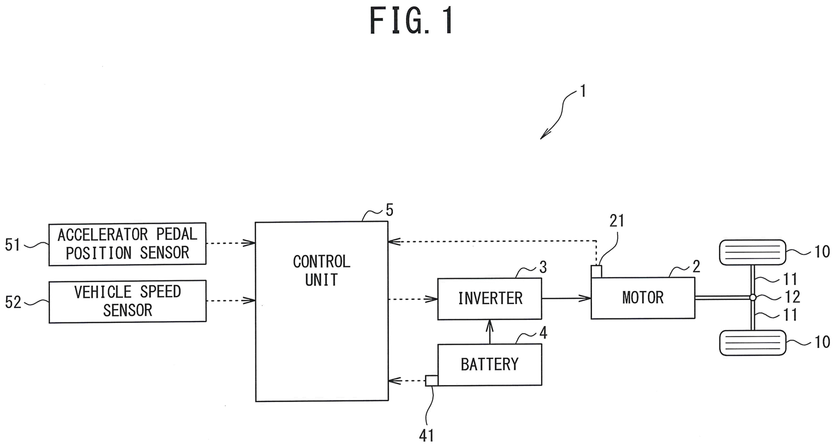

In FIG. 1, an electric vehicle 1 according to one embodiment of the present invention includes a motor 2, an inverter 3, a battery 4, and a control unit 5.

The motor 2 is constituted by a synchronous motor including, for example, a rotor in which a plurality of permanent magnets are embedded and a stator around which a stator coil is wound. The motor 2 is configured such that three-phase alternating current power is applied to the stator coil to form a rotating magnetic field in the stator, and thus the rotor is rotated by this rotating magnetic field to generate driving force.

The motor 2 is driven to utilize a rotational resistance generated during power generation for braking the electric vehicle 1. Accordingly, the motor 2 has a function of generating power by regeneration. Thus, the motor 2 also functions as a generator and can generate power for charging the battery 4.

A rotation shaft of the motor 2 is connected via a reduction gear 12 to a drive shaft 11. The motor 2 drives drive wheels 10 via the drive shaft 11.

The motor 2 is provided with a motor state sensor 21 configured to detect the rotation speed of the rotation shaft of the motor 2 and the torque output by the motor 2.

The inverter 3 supplies three-phase alternating current power to the motor 2 under the control of the control unit 5. The inverter 3 converts the three-phase alternating current power generated by the motor 2 into direct current power to charge the battery 4.

The battery 4 is composed of, for example, a nickel storage battery or a lithium storage battery, and is configured by connecting a plurality of cells in series. The battery 4 supplies electric power via the inverter 3 to the motor 2. The battery 4 is provided with a battery state sensor 41. The battery state sensor 41 detects a charge/discharge current, a voltage, and a battery temperature of the battery 4.

The control unit 5 is constituted by a computer unit including a central processing unit (CPU), a random access memory (RAM), a read only memory (ROM), input ports, and output ports.

The ROM of the control unit 5 stores a program for allowing the computer unit to function as the control unit 5 along with various control constants and various maps. In other words, the CPU executes the program stored in the ROM, and thus the computer unit functions as the control unit 5.

Various sensors including an accelerator pedal position sensor 51 and a vehicle speed sensor 52 in addition to the aforementioned motor state sensor 21 and the aforementioned battery state sensor 41 are connected to the input ports of the control unit 5.

The accelerator pedal position sensor 51 detects an accelerator pedal position that is accelerator opening of an accelerator pedal (not illustrated) to be operated by a driver. The vehicle speed sensor 52 detects the speed of the electric vehicle 1.

On the other hand, various control targets including the aforementioned inverter 3 are connected to the output ports of the control unit 5.

The control unit 5 calculates driver request torque that is torque requested by the driver, based on the accelerator opening, the vehicle speed, the rotation speed of the rotation shaft of the motor 2, and the like. The control unit 5 controls the motor 2 such that the driver request torque is output to the drive wheels 10.

The control unit 5 limits output power of the battery 4 when the state of charge (SOC) indicating the state of charge of the battery 4 is low or when the temperature of the battery 4 is high. The control unit 5 calculates, based on the SOC and the temperature of the battery 4, for example, a battery outputtable power that is electric power determined to be outputtable by the battery 4.

The control unit 5 calculates, based on the battery outputtable power, a first drive torque limit value that is a limit value of output torque of the motor 2 in accordance with the motor rotation speed that is the rotation speed of the rotation shaft of the motor 2.

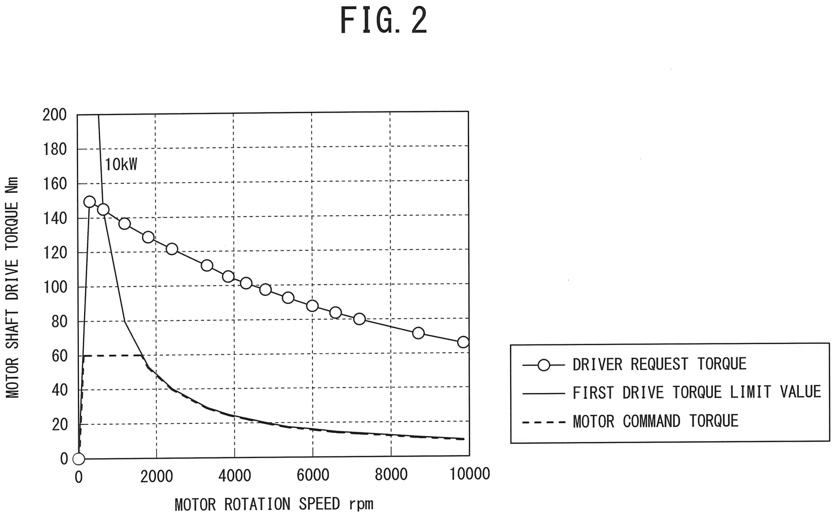

The first drive torque limit value is set as illustrated in FIG. 2, for example. FIG. 2 illustrates a case where the battery outputtable power is 10 kW.

When limiting the output torque of the motor 2 only using the first drive torque limit value, in the example of FIG. 2, the first drive torque limit value rapidly decreases when the motor rotation speed is in the range of about 700 to 2000 rpm, and thus the output torque of the motor 2 rapidly changes, which leads to deterioration in drivability.

Therefore, the control unit 5 of the present embodiment calculates a second drive torque limit value that is a smaller value than the first drive torque limit value in a low rotation speed region of the motor rotation speed, and limits the driver request torque using the first drive torque limit value and the second drive torque limit value and thereby determines motor command torque that instructs the torque output by the motor 2 to the drive wheels 10.

The control unit 5 determines the motor command torque by limiting the driver request torque using a lower one among the first drive torque limit value or the second drive torque limit value.

In the example of FIG. 2, the second drive torque limit value is set to 60 Nm, and the motor command torque changes smoothly as illustrated in the drawing; therefore, drivability can be improved.

The control unit 5 may calculate the second drive torque limit value in accordance with the battery outputtable power. For example, the control unit 5 sets the second drive torque limit value to a smaller value as the battery outputtable power becomes smaller. This is because even when the motor rotation speed is the same, the first drive torque limit value in a high rotation speed region of the motor rotation speed becomes a smaller value as the battery outputtable power becomes smaller, and the second drive torque limit value is also made smaller accordingly, thereby smoothing the change in motor command torque.

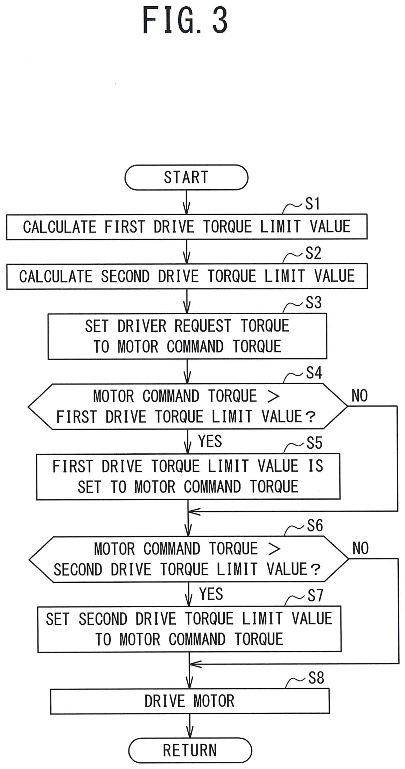

Output limited motor driving processing by the control unit 5 of the electric vehicle 1 according to the present embodiment configured as described above will be described with reference to FIG. 3. The output limited motor driving processing described below is started when the output power of the battery 4 is limited, is executed at preset time intervals, and is stopped when the limitation of the output power of the battery 4 is released.

In step S1, the control unit 5 calculates, based on the battery outputtable power, the first drive torque limit value in accordance with the motor rotation speed. After executing the processing of step S1, the control unit 5 executes the processing of step S2.

In step S2, the control unit 5 calculates the second drive torque limit value in accordance with the battery outputtable power. After executing the processing of step S2, the control unit 5 executes the processing of step S3.

In step S3, the control unit 5 sets the driver request torque to the motor command torque. After executing the processing of step S3, the control unit 5 executes the processing of step S4.

In step S4, the control unit 5 determines whether the motor command torque is larger than the first drive torque limit value.

When it is determined that the motor command torque is larger than the first drive torque limit value, the control unit 5 executes the processing of step S5. When it is determined that the motor command torque is not larger than the first drive torque limit value, the control unit 5 executes the processing of step S6.

In step S5, the control unit 5 sets the first drive torque limit value to the motor command torque. After executing the processing of step S5, the control unit 5 executes the processing of step S6.

In step S6, the control unit 5 determines whether the motor command torque is larger than the second drive torque limit value.

When it is determined that the motor command torque is larger than the second drive torque limit value, the control unit 5 executes the processing of step S7. When it is determined that the motor command torque is not larger than the second drive torque limit value, the control unit 5 executes the processing of step S8.

In step S7, the control unit 5 sets the second drive torque limit value to the motor command torque. After executing the processing of step S7, the control unit 5 executes the processing of step S8.

In step S8, the control unit 5 drives the motor 2 based on the motor command torque. After executing the processing of step S8, the control unit 5 ends the output limited motor driving processing.

As described above, in the present embodiment, the control unit 5 calculates, based on the battery outputtable power, the first drive torque limit value in accordance with the motor rotation speed, calculates the second drive torque limit value that is a smaller value than the first drive torque limit value in the low rotation speed region of the motor rotation speed, limits the driver request torque using the first drive torque limit value and the second drive torque limit value, and determines the motor command torque that instructs the torque output by the motor 2 to the drive wheels 10.

Accordingly, when the output power of the battery 4 is limited, a sudden change in drive torque of the motor 2 is suppressed, and thus a sudden drop in the feeling of acceleration can be suppressed. Therefore, drivability can be improved when the output power of the battery 4 is limited.

The control unit 5 calculates the second drive torque limit value in accordance with the battery outputtable power, and sets the second drive torque limit value to a smaller value as the battery outputtable power becomes smaller.

The first drive torque limit value is set to a smaller value as the battery outputtable power becomes smaller. Since the second drive torque limit value is also set to a smaller value as the battery outputtable power becomes smaller, a sudden change in drive torque of the motor 2 is suppressed, and thus a sudden drop in the feeling of acceleration can be suppressed. Therefore, drivability can be improved when the output power of the battery 4 is limited.

As another aspect of the present embodiment, the control unit 5 in FIG. 1 sets the limit value to 0 when the motor rotation speed is 0 based on a torque gradual change processing limit value that is an amount of increase in drive torque limit value of the motor 2 per unit time, and sets a value increased from 0 by the torque gradual change processing limit value for each unit time, to the second drive torque limit value.

The control unit 5 performs processing every unit time from the start of driving of the motor 2, sets the initial value of the second drive torque limit value to 0, and sets a value obtained by adding the torque gradual change processing limit value to the second drive torque limit value at the time of the previous processing, to the second drive torque limit value at this time. Then, the driver request torque is limited using the first drive torque limit value and the second drive torque limit value that correspond to the motor rotation speed at that time, thereby determining the motor command torque. The unit time may be a control cycle of the control unit 5.

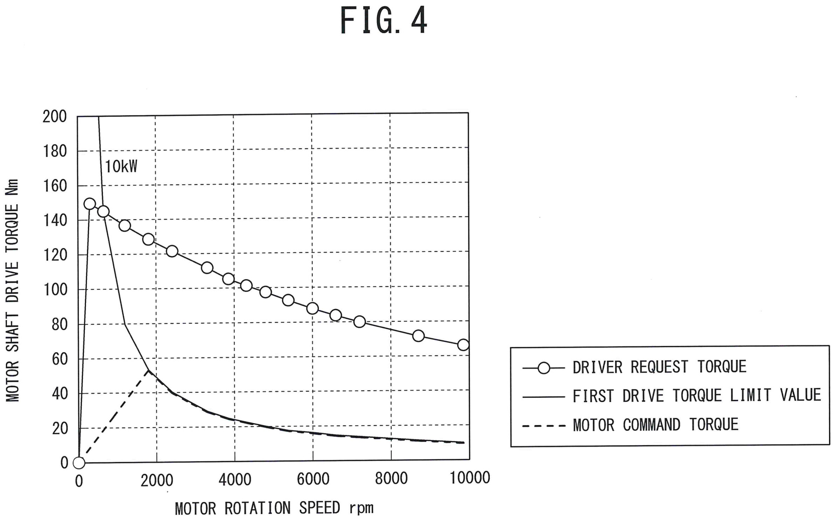

As illustrated in FIG. 4, when the motor rotation speed is from 0 to about 1800 rpm, the second drive torque limit value increases by the torque gradual change processing limit value every unit time. When the motor rotation speed is from 0 to about 1800 rpm, the motor command torque also increases by the torque gradual change processing limit value for each unit time in accordance with the second drive torque limit value. When the motor rotation speed is approximately 1800 rpm, the first drive torque limit value is smaller than the second drive torque limit value, and the motor command torque is limited in accordance with the first drive torque limit value. The motor command torque changes smoothly as illustrated in the drawing over the entire range of the motor rotation speed, and drivability can be improved. Note that FIG. 4 illustrates an example on a flat road.

The control unit 5 may calculate the torque gradual change processing limit value in accordance with the battery outputtable power. For example, the control unit 5 sets the torque gradual change processing limit value to a smaller value as the battery outputtable power becomes smaller. This is because, as the battery outputtable power becomes smaller, the first drive torque limit value in the high rotation speed region of the motor rotation speed becomes a smaller value even when the motor rotation speed is the same, and the torque gradual change processing limit value is also decreased accordingly, thereby smoothing the change of the second drive torque limit value to smooth the change of the motor command torque.

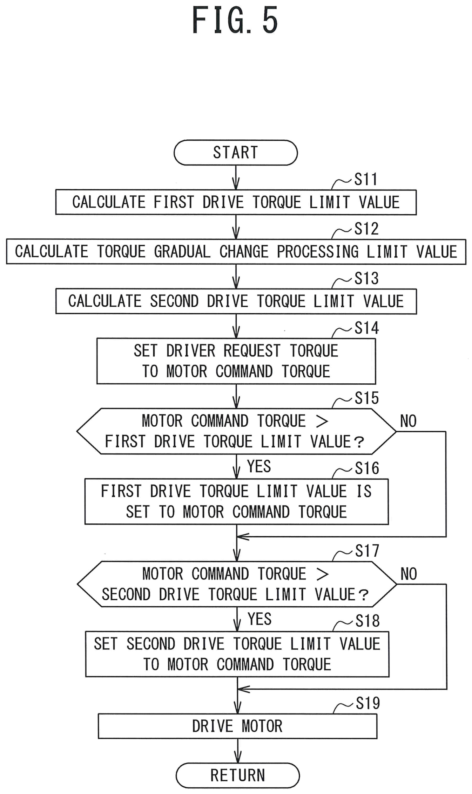

Output limited motor driving processing by the control unit 5 of the electric vehicle 1 according to another aspect of the present embodiment will be described with reference to FIG. 5. The output limited motor driving processing described below is started when the output power of the battery 4 is limited, is executed at preset time intervals, and is stopped when the limitation of the output power of the battery 4 is released.

In step S11, the control unit 5 calculates, based on the battery outputtable power, the first drive torque limit value in accordance with the motor rotation speed. After executing the processing of step S11, the control unit 5 executes the processing of step S12.

In step S12, the control unit 5 calculates the torque gradual change processing limit value in accordance with the battery outputtable power. After executing the processing of step S12, the control unit 5 executes the processing of step S13.

In step S13, the control unit 5 calculates the second drive torque limit value based on the torque gradual change processing limit value. The control unit 5 sets a value obtained by adding the torque gradual change processing limit value to the second drive torque limit value at the time of the previous processing, to the second drive torque limit value at this time. After executing the processing of step S13, the control unit 5 executes the processing of step S14.

In step S14, the control unit 5 sets the driver request torque to the motor command torque. After executing the processing of step S14, the control unit 5 executes the processing of step S15.

In step S15, the control unit 5 determines whether the motor command torque is larger than the first drive torque limit value.

When it is determined that the motor command torque is larger than the first drive torque limit value, the control unit 5 executes the processing of step S16. When it is determined that the motor command torque is not larger than the first drive torque limit value, the control unit 5 executes the processing of step S17.

In step S16, the control unit 5 sets the first drive torque limit value to the motor command torque. After executing the processing of step S16, the control unit 5 executes the processing of step S17.

In step S17, the control unit 5 determines whether the motor command torque is larger than the second drive torque limit value.

When it is determined that the motor command torque is larger than the second drive torque limit value, the control unit 5 executes the processing of step S18. When it is determined that the motor command torque is not larger than the second drive torque limit value, the control unit 5 executes the processing of step S19.

In step S18, the control unit 5 sets the second drive torque limit value to the motor command torque. After executing the processing of step S18, the control unit 5 executes the processing of step S19.

In step S19, the control unit 5 drives the motor 2 based on the motor command torque. After executing the processing of step S19, the control unit 5 ends the output limited motor driving processing.

As described above, in another aspect of the present embodiment, the control unit 5 calculates, based on the battery outputtable power, the first drive torque limit value in accordance with the motor rotation speed, calculates the torque gradual change processing limit value that is an amount of increase in drive torque limit value of the motor 2 per unit time, calculates the second drive torque limit value based on the torque gradual change processing limit value, and determines the motor command torque by limiting the driver request torque using the first drive torque limit value and the second drive torque limit value.

Accordingly, when the output power of the battery 4 is limited, a sudden change in drive torque of the motor 2 is suppressed, and thus a sudden drop in the feeling of acceleration can be suppressed. Therefore, drivability can be improved when the output power of the battery 4 is limited.

On a flat road, as illustrated in FIG. 4, the motor rotation speed increases as the drive torque of the motor 2 increases. Therefore, when the second drive torque limit value increases, the second drive torque limit value matches the first drive torque limit value after a certain time has elapsed, and the drive torque of the motor 2 does not significantly increase.

On an uphill road, when the drive torque of the motor 2 is limited to a small value, the electric vehicle 1 may not be able to start. In other words, force acts in a direction in which the electric vehicle 1 slides down on the uphill road. Therefore, unlike the flat road, the motor rotation speed does not increase unless the drive torque of the motor 2 exceeds a predetermined value even when the drive torque of the motor 2 increases. In another aspect of the present embodiment, even during stopping in which the motor rotation speed does not increase, the drive torque limit value of the motor 2 increases with the lapse of time. Therefore, the drive torque of the motor 2 continues to increase, and when the drive torque of the motor 2 exceeds sliding-down torque of the electric vehicle 1, the electric vehicle 1 can start.

Also, even on the uphill road, a rapid decrease in experiencing a sense of acceleration can be suppressed. Therefore, drivability can be improved when the output power of the battery 4 is limited.

In addition, the control unit 5 calculates the torque gradual change processing limit value in accordance with the battery outputtable power, and sets the torque gradual change processing limit value to a smaller value as the battery outputtable power becomes smaller.

The first drive torque limit value is set to a smaller value as the battery outputtable power becomes smaller. Since the degree of increase in the second drive torque limit value is suppressed as the battery outputtable power becomes smaller, a sudden change in the drive torque of the motor 2 can be suppressed to suppress a sudden drop in the feeling of acceleration. Therefore, drivability can be improved when the output power of the battery 4 is limited.

The electric vehicle of the present embodiment is not limited to a battery electric vehicle (BEV), and may be a hybrid electric vehicle (HEV) or a fuel cell vehicle.

In the present embodiment, an example in which the control unit 5 performs various determinations and calculations based on a variety of sensor information is described, but is not limited thereto. The electric vehicle 1 may include a communication unit capable of communicating with an external device such as an external server. The external device may perform various determinations and calculations based on information detected by various sensors and transmitted from the communication unit, and the communication unit may receive the determination results and calculation results and perform a variety of controls using the received determination results and calculation results.

Although the embodiment of the present invention is disclosed, it will be apparent to those skilled in the art that modifications may be made without departing from the scope of the present invention. All such modifications and equivalents are intended to be included in the appended claims.

### Reference Signs List

1 Electric vehicle
2 Motor
4 Battery
5 Control unit
21 Motor state sensor
41 Battery state sensor
51 Accelerator pedal position sensor
52 Vehicle speed sensor

## Claims

1. An electric vehicle (1), comprising:
a motor (2) that is a drive power source of the vehicle; and
a battery (4) configured to supply electric power to the motor (2); and
a control unit (5) configured to:
calculate, based on a battery outputtable power, a first drive torque limit value in accordance with a motor rotation speed;
calculate a second drive torque limit value that is a smaller value than the first drive torque limit value in a low rotation speed region of the motor rotation speed; and
determine a motor command torque by limiting driver request torque using the first drive torque limit value and the second drive torque limit value.

2. The electric vehicle as claimed in claim 1, wherein the control unit (5) calculates the second drive torque limit value in accordance with the battery outputtable power, and sets the second drive torque limit value to a smaller value as the battery outputtable power becomes smaller.

3. An electric vehicle, comprising:
a motor (2) that is a drive power source of the vehicle; and
a battery (4) configured to supply electric power to the motor; and
a control unit (5) configured to:
calculate, based on a battery outputtable power, a first drive torque limit value in accordance with a motor rotation speed;
calculate a torque gradual change processing limit value that is an amount of increase in a drive torque limit value of the motor per unit time;
calculate a second drive torque limit value based on the torque gradual change processing limit value; and
determine a motor command torque by limiting driver request torque using the first drive torque limit value and the second drive torque limit value.

4. The electric vehicle as claimed in claim 3, wherein the control unit (5) calculates the torque gradual change processing limit value in accordance with the battery outputtable power, and sets the torque gradual change processing limit value to a smaller value as the battery outputtable power becomes smaller.
